(19) **Europäisches Patentamt / European Patent Office / Office européen des brevets**

(11) **EP 1 926 610 B1**

(12) **EUROPÄISCHE PATENTSCHRIFT**

(45) Veröffentlichungstag und Bekanntmachung des Hinweises auf die Patenterteilung:
**02.11.2011 Patentblatt 2011/44**

(21) Anmeldenummer: **06776187.4**

(22) Anmeldetag: **11.07.2006**

(51) Int Cl.:
**B60C 11/13** (2006.01)

(86) Internationale Anmeldenummer:
**PCT/EP2006/006758**

(87) Internationale Veröffentlichungsnummer:
**WO 2007/028442 (15.03.2007 Gazette 2007/11)**

(54) **LAUFFLÄCHENPROFIL MIT ASYMMETRISCHEN UMFANGSNUTEN**

TREAD PROFILE WITH ASYMMETRIC CIRCUMFERENTIAL GROOVES

PROFIL DE SURFACE DE ROULEMENT PRESENTANT DES RAINURES CIRCONFERENTIELLES ASYMETRIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.09.2005 DE 102005042903**

(43) Veröffentlichungstag der Anmeldung:
**04.06.2008 Patentblatt 2008/23**

(73) Patentinhaber: **Continental Reifen Deutschland GmbH**
**30165 Hannover (DE)**

(72) Erfinder:
 • **KACHEL, Uwe**
  **38527 Meine (DE)**
 • **GÜLICH, Bernd**
  **31315 Wunstorf (DE)**
 • **SCHMIDT ZUM BERGE, Meike**
  **30177 Hannover (DE)**
 • **WELSER, Joachim**
  **31535 Neustadt a. Rbge (DE)**
 • **BOGENSCHÜTZ, Peter**
  **30900 Wedemark (DE)**

(74) Vertreter: **Finger, Karsten et al**
**Continental Aktiengesellschaft**
**Patente und Lizenzen**
**Postfach 1 69**
**30001 Hannover (DE)**

(56) Entgegenhaltungen:
**EP-A- 1 508 456**

 • **PATENT ABSTRACTS OF JAPAN Bd. 015, Nr. 178 (M-1110), 8. Mai 1991 (1991-05-08) -& JP 03 042306 A (BRIDGESTONE CORP), 22. Februar 1991 (1991-02-22)**
 • **PATENT ABSTRACTS OF JAPAN Bd. 1999, Nr. 10, 31. August 1999 (1999-08-31) -& JP 11 123909 A (BRIDGESTONE CORP), 11. Mai 1999 (1999-05-11)**

**Beschreibung**

Die Erfindung betrifft ein Laufflächenprofil eines Fahrzeugreifens - insbesondere eines Fahrzeugluftreifens - mit einer oder mehreren in Umfangsrichtung des Fahrzeugreifens gerichteten, über den Umfang des Fahrzeugreifens erstreckten Umfangsrillen die mit zwei Rillenwänden axial nach beiden Seiten jeweils eine über den Umfang des Fahrzeugreifens erstreckte Profilrippe oder Profilblockreihe begrenzt, wobei die Umfangsrille mit einem über den Umfang des Fahrzeugreifens erstreckten Rillengrund und den beiderseits des Rillengrundes aus dem Rillengrund nach radial außen erstreckten, die Umfangsrille in axialer Richtung begrenzenden Rillenwänden ausgebildet ist.

Üblicherweise werden bei derartigen Fahrzeugreifen die Umfangsrillen in einer senkrecht zur Erstreckungsrichtung des Rillengrundes ausgebildeten Schnittebene jeweils mit von radial innen nach radial außen v-förmig erweitertem Rillenquerschnitt mit ausgebildet, wobei die beiden Rillenwände einen gleichen Neigungswinkel zur Radialen aufweisen. Der Übergang zwischen Rillengrund und Neigungswinkeln ist ebenfalls an beiden Rillenwänden mit einem gleich großen Krümmungsradius ausgebildet.

Derartige Fahrzeugreifen besonders im Hochgeschwindigkeitsbereich unterliegen dem Zielkonflikt aus guten Handlingeigenschaften einerseits und guten Aquaplaningeigenschaften andererseits. Zur Erzielung guter Handlingeigenschaften ist eine hohe Quersteifigkeit der Profilblockelemente bzw. der Profilrippen um ihre Umfangsrichtung wünschenswert. Hierzu ist es wünschenswert die Neigungswinkel der Rillenwände von Umfangsrillen möglichst groß auszubilden. Zur Erzielung guter Aquaplaningeigenschaften ist es wünschenswert, den offenen Querschnitt einer Umfangsrille möglichst groß auszubilden. Hierzu ist es wünschenswert die Neigungswinkel der Rillenwände zur Radialen möglichst klein auszubilden. Aufgrund dieser sich widersprechenden Anforderungen wird häufig ein Kompromiss mit Neigungswinkeln gewählt, die reduzierte Handlingeigenschaften mit reduzierten Aquaplaningeigenschaften verbindet. Je nach Anforderungen werden die beiden Neigungswinkel zugunsten verbesserter Handlingeigenschaften unter in Kaufnahme reduzierter Aquaplaningeigenschaften größer oder aber zugunsten verbesserter Aquaplaningeigenschaften unter in Kaufnahme reduzierter Handlingeigenschaften kleiner gewählt.

Es ist - beispielsweise aus der EP 0 681 930 B1 - bekannt, die beiden Rillenwände zur Erhöhung der Traktion auf Schnee mit unterschiedlichen Neigungswinkeln gegenüber der Radialen auszubilden, wobei der Neigungswinkel der jeweils zur Äquatorebene des Reifens weisenden Seitenwand einer Umfangsrille jeweils kleiner gewählt ist als der Neigungswinkel der von der Äquatorebene wegweisenden Seite. Die Übergänge zwischen Rillengrund und Rillenwänden sind - wie üblich - jeweils gleich ausgebildet.

Darüber hinaus ist es im Zusammenhang mit Diagonalreifen für Nutzfahrzeuge aus der US 4,284,115 bekannt, zur Reduzierung von bei solchen Fahrzeugreifen möglichen Rissbildungen im Rillengrund den Neigungswinkel an der zur Äquatorebene hinweisenden Rillenwand kleiner als den von der Äquatorebene wegweisenden Rillenwand auszubilden. Die Übergänge zwischen Rillengrund und Rillenwänden sind - wie üblich - gleich ausgebildet. Als Alternative ist aus diesem Dokument bekannt, ebenfalls zur Vermeidung der Rissbildung bei gleichem Neigungswinkel der beiden Seitenwände den Krümmungsradius im Übergang zwischen der zur Äquatorebene weisenden Seitenwand und dem Rillengrund größer auszubilden als den Krümmungsradius im Übergang zwischen der zur Äquatorebene weisenden Seitenwand und dem Rillengrund.

Aus der gattungsgemäßen JP 03042306 A ist eine Rille eines Laufflächenprofils bekannt mit zwei Rillenwänden, deren eine Rillenwand in einer Schnittebene einen größeren Schnittwinkel zur radialen Richtung aufweist als die andere Rillenwand und die im Übergang von Rillenwand zum Rillengrund an der Rillenwand mit größerem Schnittwinkel eine Krümmung mit größerem Krümmungsradius aufweist als an der anderen Rillenwand. Der Erfindung liegt die Aufgabe zugrunde, mit einfachen Mitteln ein Laufflächenprofil eines Fahrzeugreifens - insbesondere eines Fahrzeugluftreifens - mit einer oder mehreren in Umfangsrichtung des Fahrzeugreifens gerichteten, über den Umfang des Fahrzeugreifens erstreckten Umfangsrillen, die mit zwei Rillenwänden axial nach beiden Seiten jeweils eine über den Umfang des Fahrzeugreifens erstreckte Profilrippe oder Frofilblockreihe begrenzt, wobei die Umfangsrille mit einem über den Umfang des Fahrzeugreifens erstreckten Rillengrund und den beiderseits des Rillengrundes aus dem Rillengrund nach radial außen erstreckten, die Umfangsrille in axialer Richtung begrenzenden Rillenwänden ausgebildet ist, zu schaffen, das bei guten Handlingeigenschaften gute Aquaplaningeigenschaften ermöglicht.

Die Aufgabe wird erfindungsgemäß die Ausbildung eines Laufflächenprofils eines Fahrzeugreifens - insbesondere eines Fahrzeugluftreifens - mit einer oder mehreren in Umfangsrichtung des Fahrzeugreifens gerichteten, über den Umfang des Fahrzeugreifens erstreckten Umfangsrillen, die mit zwei Rillenwänden axial nach beiden Seiten jeweils eine über den Umfang des Fahrzeugreifens erstreckte Profilrippe oder Profilblockreihe begrenzt, wobei die Umfangsrille mit einem über den Umfang des Fahrzeugreifens erstreckten Rillengrund und den beiderseits des Rillengrundes aus dem Rillengrund nach radial außen erstreckten, die Umfangsrille in axialer Richtung begrenzenden Rillenwänden ausgebildet ist, bei dem längs der Erstreckungsrichtung der Umfangsrille jeweils in einer senkrecht zur Erstreckungsrichtung des Rillengrundes ausgebildeten Schnittebene die erste Rillenwand von radial innen nach radial außen von der Umfangsrille wegweisend geneigt mit einem ersten Schnittwinkel $\alpha$ zur Radialen R im Reifen und die zweite Rillenwand von radial innen nach radial außen von der Umfangsrille wegweisend geneigt mit einem zweiten Schnittwinkel $\beta$ zur

Radialen im Reifen, der Übergang zwischen erster Rillenwand und Rillengrund mit einem ersten Krümmungsradius $R_1$ und der Übergang zwischen zweiter Rillenwand und Rillengrund mit einem zweiten Krümmungsradius $R_2$ ausgebildet ist, wobei sowohl der erste Schnittwinkel $\alpha$ zur Radialen R im Reifen jeweils größer als der zweite Schnittwinkel $\beta$ zur Radialen R im Reifen als auch der erste Krümmungsradius $R_1$ jeweils größer als der zweite Krümmungsradius $R_2$ ausgebildet ist, gemäß den Merkmalen von Anspruch 1 gelöst, wobei längs der Erstreckungsrichtung der Umfangsrille jeweils in einer senkrecht zur Erstreckungsrichtung des Rillengrundes ausgebildeten Schnittebene jeweils zwischen der Verlängerung der ersten Rillenwand längs deren Erstreckungsrichtung nach radial innen, der axialen Verlängerung des Rillengrundes längs der Konturerstreckung des Rillengrundes zur ersten Rillenwand hin und der Kontur des ersten Krümmungsradius $R_1$

ein erstes Flächenelement $F_1$ und zwischen der Verlängerung der zweiten Rillenwand längs deren Erstrekkungsrichtung nach radial innen, der axialen Verlängerung des Rillengrundes längs der Konturerstreckung des Rillengrundes zur zweiten Rillenwand hin und der Kontur des zweiten Krümmungsradius $R_2$ ein zweites Flächenelement $F_2$ eingeschlossen ist, wobei für das Verhältnis V der Fläche $A_1$ des ersten Flächenelementes $F_1$ zur Fläche $A_2$ des zweiten Flächenelementes $F_2$ gilt: $V = (A_1/A_2)$ mit $1{,}5 \leq V \leq 8$, insbesondere $3 \leqq V \leqq 6$.

Durch diese Ausbildung mit größerem Neigungswinkel der ersten Rillenwand und größerem Krümmungsradius zwischen Rillengrund und erster Rillenwand kann eine besonders hohe Quersteifigkeit des Profils entgegen den aus dieser Richtung auf das Profil einwirkenden Querbelastungen eingestellt werden. Die Ausbildung mit kleinerem Neigungswinkel der ersten Rillenwand und kleinerem Krümmungsradius zwischen Rillengrund und zweiter Rillenwand kann ein sehr großer offener Querschnitt der Profilrille erzielt werden. Somit können gezielt die für gute Handlingeigenschaften wesentliche Querkräfte effizient aufgenommen werden und dennoch viel Wasser zuverlässig über die Umfangsrillen aufgenommen und abgeleitet werden.

Gerade im Profilgrund wird durch große bis in die Rille reichende Querschnittsfläche der ersten Rillenwand eine sehr hohe Quersteifigkeit erzielt bei gleichzeitiger hohen Aufnahmekapazität im Rillengrundbereich auf der zur zweiten Rillenwand hin gewandten Rillenseite.

Besonders vorteilhaft ist die Ausbildung eines Laufflächenprofils gemäß den Merkmalen von Anspruch 2, wobei die erste Rillenwand die Umfangsrille zu der als zur Fahrzeugaußenseite hinweisend ausgebildeten Schulter und die zweite Rillenwand die Umfangsrille zu der als zur Fahrzeuginnenseite hinweisend ausgebildeten Schulter begrenzt. Hierdurch kann sichergestellt werden, dass jeweils die bei einem Fahrzeug im Betriebszustand mit montierten Fahrzeugreifen beim Handling wesentlichen Belastungen zuverlässig aufgenommen werden.

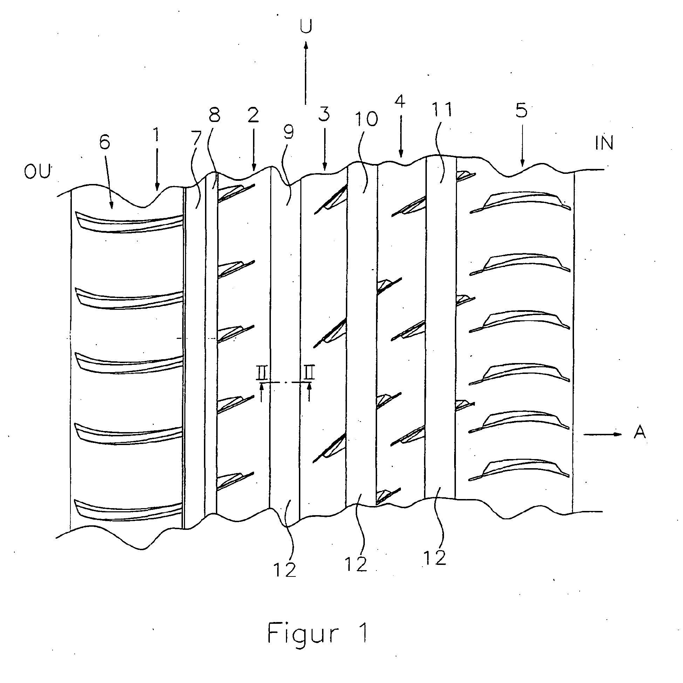

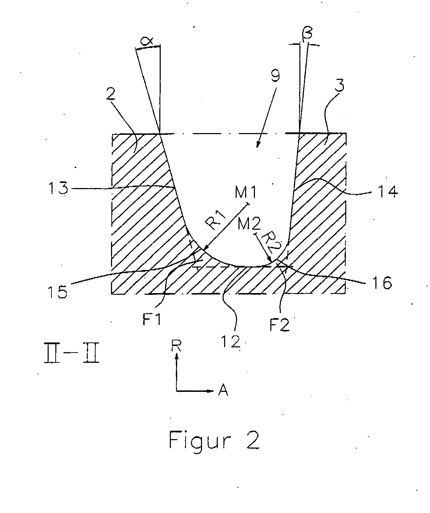

Die Erfindung wird im Folgenden an Hand eines in den Fig. 1 und 2 dargestellten Ausführungsbeispiels näher erläutert.

Fig. 1    Ausschnitt eines asymmetrischen Laufflächenprofils eines Fahrzeugluftreifens für Personenkraftwagen Draufsicht,

Fig. 2    ausschnittsweise Schnittdarstellung des Laufflächenprofils einer der Umfangsrillen gemäß Schnitt II-II von Fig. 1 in einer Querschnittsebene, die die Reifenachse beinhaltet, zur Erläuterung der Erfindung.

Fig. 1 und Fig. 2 zeigen ein asymmetrisches Laufflächenprofil eines auf einer Felge an einem Fahrzeug montierten, im Betriebszustand befindlichen PKW-Reifens radialer Bauart, der für Hochgeschwindigkeiten geeignet ist.

In Fig. 1 ist die Umfangsrichtung U sowie die axiale Richtung A des Fahrzeugluftreifens und in Fig. 2 die axiale Richtung A sowie die radiale Richtung R des Fahrzeugluftreifens jeweils mit Pfeilen gekennzeichnet.

Wie in Fig. 1 zu erkennen ist, weist das Laufflächenprofil von der am Fahrzeug zur axialen Außenseite (O U) des Fahrzeugs weisenden axialen Reifenschulter ausgehend in axialer Richtung A nach axial innen zur Fahrzeugmitte (IN) hin weisenden Reifenschulter hin nebeneinander angeordnet ein in Umfangsrichtung U ausgerichtetes Außenschulterprofilband 1, eine erste zentrale Umfangsrippe 2, eine zweite zentrale Umfangsrippe 3, eine dritte zentrale Umfangsrippe 4 und ein in Umfangsrichtung U ausgerichtetes Innenschulterprofilband 5 auf. Das Außenschulterprofilband 1 sowie die Umfangsrippen 2, 3 und 4 und das Innenschulterprofilband 5 sind jeweils über den Umfang des Fahrzeugluftreifens erstreckt ausgebildet und in Umfangsrichtung U des Fahrzeugluftreifens ausgerichtet.

Das Außenschulterprofilband 1 ist aus einer auf der axialen Außenseite des Außenschulterprofilbandes 1 axial zur Außenschulter (OU) hin angeordneten Profilblockreihe 6 bekannter Art mit in Umfangsrichtung U des Fahrzeugluftreifens hintereinander angeordneten und jeweils durch Querrillen voneinander getrennt ausgebildeten Profilblockelementen und aus einer auf der axialen Innenseite des Außenschulterprofilbandes 1 ausgebildeten über den Umfang des Fahrzeugluftreifens erstreckten in Umfangsrichtung U ausgerichteten Profilrippe 7 ausgebildet, die jeweils axial durch einen in Umfangsrichtung U ausgerichteten über den gesamten Umfang des Fahrzeugluftreifens erstreckten Feineinschnitt voneinander getrennt sind.

Das Innenschulterprofilband 5 ist in bekannter Weise aus einer über den gesamten Umfang des Fahrzeugluftreifens erstreckt ausgebildeten und in Umfangsrichtung U ausgerichteten Profilrippe mit in Umfangsrichtung zueinander beabstandeten Quereinschnitten ausgebildet.

Das Außenschulterprofilband 1 und die Umfangsrippe 2 sind durch eine Umfangsrille 8, die sich über den gesamten Umfang des Fahrzeugluftreifens erstreckt und in Umfangsrichtung U ausgerichtet ist, axial voneinander getrennt. Die Umfangsrippe 2 und die Umfangsrippe 3 sind durch eine Umfangsrille 9, die sich über den gesamten Umfang des Fahrzeugluftreifens erstreckt und in Umfangsrichtung U ausgerichtet ist, axial voneinander getrennt. Die Umfangsrippe 3 und die Umfangsrippe 4 sind durch eine Umfangsrille 10, die sich über den gesamten Umfang des Fahrzeugluftreifens erstreckt und in Umfangsrichtung U ausgerichtet ist, axial voneinander getrennt. Die Umfangsrippe 4 und das Schulterprofilband 5 sind durch eine Umfangsrille 11, die sich über den gesamten Umfang des Fahrzeugluftreifens erstreckt und in Umfangsrichtung U ausgerichtet ist, axial voneinander getrennt.

Der Querschnitt der Umfangsrillen 9, 10, 11 12 in den Querschnittsebenen senkrecht zur Erstreckungsrichtung der jeweiligen Umfangsrille 9,10,11,12 ist - wie beispielhaft am Querschnitt der Umfangsrille 9 in Fig. 2 dargestellt ist - ausgebildet. Er wird im Folgenden der Einfachheit lediglich anhand des Querschnitts der Umfangsrille 9 erläutert.

Die Umfangsrillen 9, 10, 11 sind jeweils mit einem Rillengrund 12, einer ersten am Fahrzeug zur axialen Außenseite (OU) weisenden Rillenwand 13 und einer zweiten zur Fahrzeuginnenseite (IN) weisenden zweiten Seitenwand 14 ausgebildet. Am Beispiel der Umfangsrille 9 bildet die erste Rillenwand 13 die axial zur Umfangsrille 9 weisende Flanke der Umfangsrippe 2 und die zweite Rillenwand 14 die axial zur Umfangsrille 9 weisende Flanke der Umfangsrippe 3.

Die erste Rillenwand 13 sowie die zweite Rillenwand 14 erstrecken sich dabei von radial innen nach radial außen mit einer jeweils von der axialen Mitte der Umfangsrille 9 axial wegweisenden Neigung. Die erste Rillenwand 13 schließt dabei einen Neigungswinkel $\alpha$ zur radialen R, die zweite Rillenwand 14 einen Neigungswinkel $\beta$ zur radialen R ein, wobei der Neigungswinkel $\alpha$ der ersten Rillenwand 13 zur Radialen R größer gewählt ist als der Neigungswinkel $\beta$ der zweiten Rillenwand 14 zur Radialen R.

In einem ersten Übergangsbereich 15 zwischen erster Rillenwand 13 und Rillengrund 12 ist die Querschnittskontur mit einer Krümmung mit einem Krümmungsradius $R_1$ um einen vom Rillengrund nach radial außen wegweisenden Mittelpunkt gekrümmt ausgebildet. In einem zweiten Übergangsbereich 16 zwischen der zweiten Rillenwand 14 und Rillengrund 12 ist die Querschnittskontur mit einer Krümmung mit einem Krümmungsradius $R_2$ um einen vom Rillengrund nach radial außen wegweisenden Mittelpunkt gekrümmt ausgebildet. Der erste Krümmungsradius $R_1$ des ersten Übergangsbereichs 15 ist dabei größer gewählt als der zweite Krümmungsradius $R_2$ des zweiten Übergangsbereichs 16.

Die Winkel $\alpha$ und $\beta$ sind beispielsweise so gewählt, dass $5° \leq \alpha \leq 25°$ und $1° \leq \beta \leq 12°$ ist, wobei jeweils der Winkel $\alpha$ größer gewählt ist als der Winkel $\beta$. Vorteilhafterweise ist der Winkel $\alpha$ so gewählt, dass $10° \leq \alpha \leq 20°$ und $\beta$ ist dabei so gewählt, dass $2° \leq \beta \leq 9°$, wobei jeweils der Winkel $\alpha$ größer gewählt ist als der Winkel $\beta$. Im dargestellten Beispiel von Fig. 2 ist $\alpha = 15°$ und $\beta = 5°$.

Der Krümmungsradius $R_1$ ist so gewählt, dass für $R_1$ gilt: $2mm \leq R_1 \leq 10$ mm. Der Krümmungsradius $R_2$ ist so gewählt, dass für $R_2$ gilt: $1$ mm $\leq R_2 \leq 5$ mm. Dabei ist jeweils $R_1$ größer gewählt als $R_2$. Besonders vorteilhaft sind $R_1$ und $R_2$ so gewählt, dass für $R_1$ und $R_2$ gilt: $4$ mm $\leq R_1 \leq 8$ mm und $2$ mm $\leq R_2 \leq 4$ mm, wobei $R_1$ größer gewählt ist als $R_2$.

In dem gezeigten Beispiel von Figur 2 ist $R_1 = 7,5$ mm und $R_2 = 3$ mm.

Bei Verlängerung der ersten Rillenwand 13 in der in Fig. 2 dargestellten Schnittebene nach radial innen und bei Verlängerung des Rillengrundes 12 in axialer Richtung A zur ersten Rillenwand 13 hin schließen die in Fig. 2 gestrichelt dargestellten Verlängerungen der ersten Rillenwand 13 sowie des Rillengrundes 12 und der durch den Krümmungsradius $R_1$ dargestellte erste Übergangsbereich 15 eine Fläche $F_1$ mit einem Flächeninhalt $A_1$ ein. Bei Verlängerung der zweiten Rillenwand 14 in der in Fig. 2 dargestellten Schnittebene nach radial innen sowie des Rillengrundes 12 axial zur zweiten Rillenwand 14 hin schließen die in Fig. 2 gestrichelt dargestellten Verlängerungen der zweiten Rillenwand 14 sowie des Rillengrundes 12 und der durch den Krümmungsradius $R_2$ dargestellte zweite Übergangsbereich 16 eine zweite Fläche $F_2$ mit einem Flächeninhalt $A_2$ ein, wobei die Krümmungsradien $R_1$ und $R_2$ sowie die Neigungen der ersten Rillenwand 13 sowie der zweiten Rillenwand 14 sowie des Rillengrundes 12 so gewählt sind, dass für die Flächeninhalte $A_1$ und $A_2$ der Flächen $F_1$ und $F_2$ gilt: $A_1 > A_2$.

Für das Verhältnis V des Flächeninhaltes $A_1$ der Fläche $F_1$ zum Flächeninhalt $A_2$ der Fläche $F_2$ gilt $V = (A_1 / A_2)$ mit $1,5 \leq V \leq 8$. Besonders vorteilhaft ist die Ausbildung mit einem Verhältnis V, für das gilt: $3 \leq V \leq 6$. In dem in Fig. 2 dargestellten Ausführungsbeispiel gilt: $V = 4$.

In dem in Fig. 2 dargestellten Ausführungsbeispiel ist der Rillengrund in axialer Richtung mit einer zwischen den Übergangsbereichen 15 und 16 geradliniger, parallel zur

Reifenachse ausgebildeten Schnittkontur ausgebildet. In diesem Ausführungsbeispiel mit geradliniger Schnittkontur des Rillengrundes 12 ist zur Bestimmung der Flächen $F_1$ und $F_2$ und deren Flächeninhalt $A_1$ und $A_2$ lediglich die Verlängerung der geradlinigen Kontur erforderlich. Bei Umfangsrillen, bei denen der Rillengrund 12 zwischen den Übergangsbereichen 15 und 16 ebenfalls mit einer Krümmung um einen vom Rillengrund nach radial außen wegweisenden Mittelpunkt gekrümmt ausgebildet ist, wird der Rillengrund 12 zur Ermittlung der Flächen $F_1$ und $F_2$ und deren Flächeninhalt $A_1$ und $A_2$ entsprechend der Krümmung des Rillengrundes 12 verlängert.

Auch wenn die Darstellung des Querschnittsverlaufes der Umfangsrillen 9,10 und 11 lediglich im Zusammenhang mit der Umfangsrille 9 dargestellt und erläutert wurde, sind auch die Umfangsrillen 10 und 11 in ihrem Querschnittsverlauf in entsprechender Weise ausgebildet.

In einer weiteren nicht dargestellten Ausführung wird auch die Umfangsrille 8, die jedoch schmaler als die Umfangsrillen 9, 10 und 11 ausgebildet ist, mit einem derartigen Querschittsverlauf mit entsprechendem Neigungsverlauf ihrer ersten und zweiten Rillenwand, mit entsprechendem Krümmungsverlauf ihres ersten und zweiten Übergangsbereichs zwischen Rillenwänden und Rillengrund und mit entsprechender ersten und zweiten Fläche $F_1$ und $F_2$ ausgebildet.

In einer Ausführung sind die Umfangsrillen 9, 10 und 11 und - bei Bedarf auch die Umfangsrille 8 - jeweils mit einem gleich gleichgroß gewählten Winkel $\alpha$ der ersten Rillenwand und mit jeweils einem gleichgroß gewählten Winkel $\beta$ der zweiten Rillenwand und somit auch mit gleichen Differenzen $(\alpha - \beta)$, sowie jeweils mit einem gleichgroß gewählten ersten Krümmungsradius $R_1$ und jeweils mit einem gleichgroß gewählten zweiten Krümmungsradius $R_2$, sowie jeweils mit einem gleichgroß gewählten Flächeninhalt $A_1$ der ersten Fläche $F_1$ sowie jeweils mit einem gleichgroß gewählten Flächeninhalt $A_2$ der zweiten Fläche $F_2$ ausgebildet.

In einem anderen nicht dargestellten Ausführungsbeispiel sind die Differenzen $(\alpha - \beta)$ aus den Winkeln $\alpha$ und $\beta$ in der zur Außenschulter (OU) am Fahrzeug hinweisenden Umfangsrille 9 größer gewählt als in den zur Innenschulter am Fahrzeug (IN) näher gelegenen Umfangsrillen 10 und 11.

In einem weiteren nicht dargestellten Ausführungsbeispiel ist die Differenz $(R_1 - R_2)$ in der zur Außenschulter (OU) am Fahrzeug nächstgelegenen Umfangsrille 9 größer gewählt als die Differenz $(R_1 - R_2)$ bei den zur Innenschulter am Fahrzeug (IN) näher gelegenen Umfangsrillen 10 und 11.

In einem weiteren nicht dargestellten Ausführungsbeispiel ist das Verhältnis V der Flächeninhalte $A_1$ zu $A_2$ in der zur Außenschulter (OU) am Fahrzeug nächstgelegenen Umfangsrille 9 größer gewählt als bei den zur Innenschulter am Fahrzeug (IN) näher gelegenen Umfangsrillen 10 und 11.

In einem weiteren nicht näher dargestellten Ausführungsbeispiel ist von der axial zur Außenschulter (OU) am Fahrzeug hinweisenden Seite ausgehend zu der zur am Fahrzeug zur Fahrzeuginnenseite hin weisenden Innenschulter (IN) hin jeweils von einer Umfangsrille zur nächsten Umfangsrille eine Abnahme der Winkeldifferenzen $(\alpha - \beta)$ ausgebildet. In einer weiteren nicht dargestellten Ausführungsform ist von der axial zur Außenschulter (OU) am Fahrzeug hinweisenden Seite ausgehend zu der zur am Fahrzeug zur Fahrzeuginnenseite hin weisenden Innenschulter (IN) hin jeweils von einer Umfangsrille zur nächsten Umfangsrille eine Abnahme der Radiendifferenzen $(R_1 - R_2)$ von Umfangsrille zu Umfangsrille ausgebildet. In einer weiteren nicht näher dargestellten Ausführungsform ist von der axial zur Außenschulter (OU) am Fahrzeug hinweisenden Seite ausgehend zu der zur am Fahrzeug zur Fahrzeuginnenseite hin weisenden Innenschulter (IN) hin jeweils von einer Umfangsrille zur nächsten Umfangsrille eine Abnahme von Umfangsrille zu Umfangsrille eine Abnahme des Verhältnisse V ausgebildet.

**Bezugszeichenliste**

(Teil der Beschreibung)

1      Außenschulterprofilband

2      Umfangsrippe

3      Umfangsrippe

4      Umfangsrippe

5      Innenschulterprofilband

6      Profilblockreihe

7      Profilrippe

8      Umfangsrille

9      Umfangsrille

10      Umfangsrille

11      Umfangsrille

12 Rillengrund

13 Rillenwand

14 Rillenwand

15 Übergangsbereich

16 Übergangsbereich

**Patentansprüche**

1. Laufflächenprofil eines Fahrzeugreifens - insbesondere eines Fahrzeugluftreifens - mit einer oder mehreren in Umfangsrichtung des Fahrzeugreifens gerichteten, über den Umfang des Fahrzeugreifens erstreckten Umfangsrillen (9,10,11), die mit zwei Rillenwänden (13,14) axial nach beiden Seiten jeweils eine über den Umfang des Fahrzeugreifens erstreckte Profilrippe oder Profilblockreihe begrenzt, wobei die Umfangsrille (9,10,11) mit einem über den Umfang des Fahrzeugreifens erstreckten Rillengrund (12) und den beiderseits des Rillengrundes aus dem Rillengrund (12) nach radial außen erstreckten, die Umfangsrille in axialer Richtung begrenzenden Rillenwänden (13,14) ausgebildet ist, wobei längs der Erstreckungsrichtung der Umfangsrille (9,10,11) jeweils in einer senkrecht zur Erstreckungsrichtung des Rillengrundes (12) ausgebildeten Schnittebene die erste Rillenwand (13) von radial innen nach radial außen von der Umfangsrille wegweisend geneigt mit einem ersten Schnittwinkel α zur Radialen R im Reifen und die zweite Rillenwand (14) von radial innen nach radial außen von der Umfangsrille wegweisend geneigt mit einem zweiten Schnittwinkel β zur Radialen R im Reifen, der Übergang (15) zwischen erster Rillenwand (13) und Rillengrund (12) mit einem ersten Krümmungsradius $R_1$ und der Übergang (16) zwischen zweiter Rillenwand (14) und Rillengrund (12) mit einem zweiten Krümmungsradius $R_2$ ausgebildet ist,
wobei sowohl der erste Schnittwinkel α zur Radialen R im Reifen jeweils größer als der zweite Schnittwinkel β zur Radialen R im Reifen als auch der erste Krümmungsradius $R_1$ jeweils größer als der zweite Krümmungsradius $R_2$ ausgebildet ist,
**dadurch gekennzeichnet,**
**dass** längs der Erstreckungsrichtung der Umfangsrille (9,10,11) jeweils in einer senkrecht zur Erstreckungsrichtung des Rillengrundes ausgebildeten Schnittebene jeweils zwischen der Verlängerung der ersten Rillenwand (13) längs deren Erstreckungsrichtung nach radial innen, der axialen Verlängerung des Rillengrundes (12) längs der Konturerstreckung des Rillengrundes (12) zur ersten Rillenwand (13) hin und der Kontur des ersten Krümmungsradius $R_1$ im ersten Übergangsbereich (15) ein erstes Flächenelement $F_1$ mit einem Flächeninhalt $A_1$ und zwischen der Verlängerung der zweiten Rillenwand (14) längs deren Erstreckungsrichtung nach radial innen, der axialen Verlängerung des Rillengrundes (12) längs der Konturerstreckung des Rillengrundes (12) zur zweiten Rillenwand (14) hin und der Kontur des zweiten Krümmungsradius $R_2$ im zweiten Übergangsbereich (16) ein zweites Flächenelement $F_2$ mit einem Flächeninhalt $A_2$ eingeschlossen ist, wobei für das Verhältnis V der Fläche $A_1$ des ersten Flächenelementes $F_1$ zur Fläche $A_2$ des zweiten Flächenelementes $F_2$ gilt:

$$V = (A_1 / A_2) \text{ mit } 1{,}5 \leq V \leq 8, \text{ insbesondere } 3 \leq V \leq 6.$$

2. Laufflächenprofil eines Fahrzeugreifens gemäß den Merkmalen von Anspruch 1, wobei die erste Rillenwand (13) die Umfangsrille (9,10,11) zu der als zur Fahrzeugaußenseite (OU) hinweisend ausgebildeten Schulter und die zweite Rillenwand (14) die Umfangsrille (9,10,11) zu der als zur Fahrzeuginnenseite (IN) hinweisend ausgebildeten Schulter hin begrenzt.

**Claims**

1. Tread profile of a vehicle tyre - in particular a pneumatic vehicle tyre - with one or more circumferential grooves (9, 10, 11), which is/are directed in the circumferential direction of the vehicle tyre, is/are made to extend over the circumference of the vehicle tyre and, with two groove walls (13, 14), respectively delimit(s) axially to both sides a profile rib or row of profile blocks made to extend over the circumference of the vehicle tyre, the circumferential groove (9, 10, 11) being formed with a groove base (12), made to extend over the circumference of the vehicle tyre, and the groove walls (13, 14), made to extend radially outwards from the groove base (12) on both sides of the groove base and delimiting the circumferential groove in the axial direction, wherein, along the direction of extent of the circumferential groove (9, 10, 11) respectively in a sectional plane formed perpendicularly to the direction of extent of the groove base (12), the first groove wall (13) is formed such that it is made to slope away from the circumferential groove from the inside outwards in the radial sense, with a first sectional angle $\alpha$ in relation to the radial R in the tyre, and the second groove wall (14) is formed such that it is made to slope away from the circumferential groove from the inside outwards in the radial sense, with a second sectional angle $\beta$ in relation to the radial R in the tyre, the transition (15) between the first groove wall (13) and the groove base (12) is formed with a first radius of curvature $R_1$ and the transition (16) between the second groove wall (14) and the groove base (12) is formed with a second radius of curvature $R_2$, not only the first sectional angle $\alpha$ in relation to the radial R in the tyre being respectively formed greater than the second sectional angle $\beta$ in relation to the radial R in the tyre but also the first radius of curvature $R_1$ being respectively formed greater than the second radius of curvature $R_2$, **characterized in that**, along the direction of extent of the circumferential groove (9, 10, 11) respectively in a sectional plane formed perpendicularly to the direction of extent of the groove base, a first area element $F_1$ with an area content $A_1$ is enclosed between the extension of the first groove wall (13) along the direction of extent thereof radially inwards, the axial extension of the groove base (12) along the extent of the contour of the groove base (12) towards the first groove wall (13) and the contour of the first radius of curvature $R_1$ in the first transitional region (15), and a second area element $F_2$ with an area content $A_2$ is enclosed between the extension of the second groove wall (14) along the direction of extent thereof radially inwards, the axial extension of the groove base (12) along the extent of the contour of the groove base (12) towards the second groove wall (14) and the contour of the second radius of curvature $R_2$ in the second transitional region (16), the following applying for the ratio V of the area $A_1$ of the first area element $F_1$ to the area $A_2$ of the second area element $F_2$ : $V = (A_1/A_2)$ where $1.5 \leq V \leq 8$, in particular $3 \leq V \leq 6$.

2. Tread profile of a vehicle tyre according to the features of Claim 1, the first groove wall (13) delimiting the circumferential groove (9, 10, 11) in relation to the shoulder formed pointing towards the outside of the vehicle (OU) and the second groove wall (14) delimiting the circumferential groove (9, 10, 11) in relation to the shoulder formed pointing towards the inside of the vehicle (IN).

**Revendications**

1. Profil de surface de roulement de bandage pour roue de véhicule, en particulier de bandage pneumatique pour roue de véhicule, présentant une ou plusieurs rainures périphériques (9, 10, 11) orientées dans la direction périphérique du bandage pour roue de véhicule, s'étendant sur toute la périphérie du bandage pour roue de véhicule et délimitant axialement sur chacun des deux côtés, par deux parois (13, 14) de rainure, une rainure profilée ou une rangée de blocs profilés qui s'étendent sur toute la périphérie du bandage pour roue de véhicule,
la ou les rainures périphériques (9, 10, 11) étant configurées avec un fond (12) de rainure qui s'étend sur toute la périphérie du bandage pour roue de véhicule et des parois (13, 14) de rainure qui s'étendent radialement vers l'extérieur partant du fond (12) de la rainure et sur les deux côtés de la rainure et qui délimitent la rainure périphérique dans la direction axiale,
la première paroi (13) de rainure étant inclinée en s'éloignant de la rainure périphérique depuis une position située radialement à l'intérieur jusqu'à une position située radialement à l'extérieur dans la direction d'extension de la rainure périphérique (9, 10, 11) sous un premier angle de coupe $\alpha$ par rapport à la radiale R dans un plan de coupe formé perpendiculairement à la direction d'extension du fond (12) de la rainure dans le bandage de roue, la deuxième paroi (14) de la rainure étant inclinée en s'éloignant de la rainure périphérique depuis une position située radialement à l'intérieur jusqu'à une position située radialement à l'extérieur sous un deuxième angle de coupe $\beta$ par rapport à la radiale R du bandage de roue, la transition (15) étant configurée avec un premier rayon de courbure $R_1$ entre la première paroi (13) de la rainure et le fond (12) de la rainure et la transition (16) avec un deuxième rayon de courbure $R_2$ entre la deuxième paroi (14) de la rainure et le fond (12) de la rainure,
le premier angle de coupe $\alpha$ par rapport à la radiale R du bandage de roue étant supérieur au deuxième angle de coupe $\beta$ par rapport à la radiale R du bandage de roue et le premier rayon de courbure $R_1$ étant supérieur au deuxième rayon de courbure $R_2$,
**caractérisé en ce que**
un premier élément de surface $F_1$ dont la superficie incluse est $A_1$ est inclus dans la direction d'extension de la rainure périphérique (9, 10, 11) dans un plan de coupe formé perpendiculairement à la direction d'extension du fond de la rainure, entre le prolongement de la première paroi (13) de la rainure dans sa direction d'extension radialement vers l'intérieur, le prolongement axial du fond (12) de la rainure dans l'extension du contour du fond (12) de la rainure vers la première paroi (13) de la rainure et le contour du premier rayon de courbure $R_1$ de la première partie de transition (15),

**en ce qu'**un deuxième élément de surface $F_2$ dont la superficie incluse est $A_2$ est inclus entre le prolongement de la deuxième paroi (14) de la rainure dans sa direction d'extension radialement vers l'intérieur, le prolongement axial du fond (12) de la rainure dans la direction d'extension (12) de la rainure vers la deuxième paroi (14) de la rainure et le contour du deuxième rayon de courbure $R_2$ dans la deuxième partie de transition (16) et

**en ce que** le rapport V entre la superficie $A_1$ du premier élément de surface $F_1$ et la superficie $A_2$ du deuxième élément de surface $F_2$ vérifie la relation $V = (A_1/A_2)$ avec $1, 5 \leq V \leq 8$ et en particulier $3 \leq V \leq 6$.

2. Profil de surface de roulement de bandage pour roue de véhicule selon les caractéristiques de la revendication 1, dans lequel la première paroi (13) de la rainure délimite la rainure périphérique (9, 10, 11) en direction de l'épaulement formé en direction du côté extérieur (OU) du véhicule et la deuxième paroi (14) de la rainure délimite la rainure périphérique (9, 10, 11) en direction de l'épaulement formé vers le côté intérieur (IN) du véhicule.

Figur 1

II—II

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0681930 B1
- US 4284115 A

- JP 03042306 A